# EUROPÄISCHE PATENTSCHRIFT

(11) **EP 2 679 849 B1**
(45) Veröffentlichungstag und Bekanntmachung des Hinweises auf die Patenterteilung: **07.09.2016**
(21) Anmeldenummer: 12004767.5
(22) Anmeldetag: 26.06.2012
(51) Int. Cl.: F16D 35/02

(54) **Flüssigkeitsreibungskupplung**
Fluid friction coupling
Couplage à friction de liquide

(43) Veröffentlichungstag der Anmeldung: 01.01.2014
(73) Patentinhaber: BorgWarner Inc., Auburn Hills, MI 48326 (US)
(72) Erfinder: Buchholz, Thomas, 78333 Stockach (DE); Gerber, Frank, 88677 Markdorf (DE)
(74) Vertreter: Hoefer & Partner Patentanwälte mbB

(56) Entgegenhaltungen:
- EP-A1- 0 936 371
- EP-B1- 1 731 787
- WO-A1-2007/016314
- US-A- 5 499 706
- US-A- 6 026 943

## Beschreibung

Die Erfindung betrifft eine Flüssigkeitsreibungskupplung gemäß dem Oberbegriff des Anspruches 1.

Eine derartige Flüssigkeitsreibungskupplung ist aus der WO 2007/0163 14 A1 bekannt, deren Offenbarungsgehalt hiermit durch explizite Bezugnahme zum Offenbarungsgehalt vorliegender Anmeldung gemacht wird.

Eine weitere Flüssigkeitsreibungskupplung ist aus der US 5 499 706 A bekannt.

Es ist Aufgabe der vorliegenden Erfindung, eine Flüssigkeitsreibungskupplung der im Oberbegriff des Anspruches 1 angegebenen Art zu schaffen, mit der es auf einfache Art und Weise möglich ist, die Kupplungseffizienz zu steigern.

Die Lösung dieser Aufgabe erfolgt durch die Merkmale des Anspruchs 1.

Durch das Vorsehen eines drehbar gelagerten Vorlaufpumpenelementes, das mit dem Gehäuse einen Scherspalt definiert, wird es möglich gemacht, auf einfache Art und Weise durch Ausnutzung einer Differenzdrehzahl zwischen dem Pumpenelement und dem Gehäuse bzw. der Sekundärseite der Flüssigkeitsreibungskupplung einen von der Differenzdrehzahl abhängigen Volumenstrom von der Vorratskammer in die Arbeitskammer zu erzeugen.

Zu den besonderen Vorteilen der erfindungsgemäßen Flüssigkeitsreibungskupplung zählt zunächst, dass nur eine geringe Menge an Kupplungsflüssigkeit erforderlich ist, da aufgrund der zuvor erläuterten Anordnung eine aktive Förderpumpe im Ölreservoir gebildet wird, was hinsichtlich der Kupplungsflüssigkeitsmenge gegenüber dem bekannten Ausnutzen von Zentrifugalkräften zum Füllen der Arbeitskammer vorteilhaft ist.

Ferner wird das Ansprechverhalten der erfindungsgemäßen Flüssigkeitsreibungskupplung aufgrund des niedrigeren Kupplungsflüssigkeitsanteils schneller.

Es ergibt sich ferner eine äußerst kompakte Bauweise, da der Außendurchmesser der Vorratskammer bzw. des Reservoirs größer gemacht werden kann, als der Innendurchmesser der Arbeitskammer.

Zusammenfassend ist somit festzustellen, dass aufgrund des Umstandes, dass das Vorlaufpumpenelement mit Primärdrehzahl (Drehzahl der Welle) dreht und gegenüber dem Gehäuse Kupplungsflüssigkeit abstreift, eine hervorragende Kupplungsleistung erreichbar ist.

Die Unteransprüche haben vorteilhafte Weiterbildungen der Erfindung zum Inhalt.

Die Kupplungsleistung kann ferner dadurch verbessert werden, dass eine Rückförderpumpe vorgesehen ist, die mit Sekundär- oder Primärdrehzahl dreht und aufgrund ihrer Anordnung zwischen Kupplungsscheibe und Gehäuse Kupplungsflüssigkeit abstreift.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1A: eine Schnittdarstellung einer erfindungsgemäßen Flüssigkeitsreibungskupplung aus einer ersten Ansichtsrichtung,
- Fig. 1B: eine perspektivische, geschnittene Darstellung der Flüssigkeitsreibungskupplung gemäß Fig. 1A,
- Fig. 2A: eine der Fig. 1A entsprechende Darstellung der Flüssigkeitsreibungskupplung aus einer zweiten Ansichtsrichtung,
- Fig. 2B: eine der Fig. 1B entsprechende Darstellung der Flüssigkeitsreibungskupplung aus der Ansichtsrichtung gemäß Fig. 2A,
- Fig. 3: eine perspektivische Draufsicht auf die Flüssigkeitsreibungskupplung ohne Gehäusedeckel,
- Fig. 4: eine der Fig. 3 entsprechende Teildarstellung der Flüssigkeitsreibungskupplung,
- Fig. 5: eine der Fig. 4 entsprechende Teildarstellung eines anderen Bereiches der Flüssigkeitsreibungskupplung,
- Fig. 6: eine Detaildarstellung eines in Fig. 5 dargestellten Ventilgliedes,
- Fig. 7: eine erste Ausführungsform eines Hydraulikschaltplans für die erfindungsgemäße Flüssigkeitsreibungskupplung, und
- Fig. 8: eine der Fig. 3 entsprechende Darstellung einer zweiten Ausführungsform des Hydraulikschaltplans für die erfindungsgemäße Flüssigkeitsreibungskupplung.

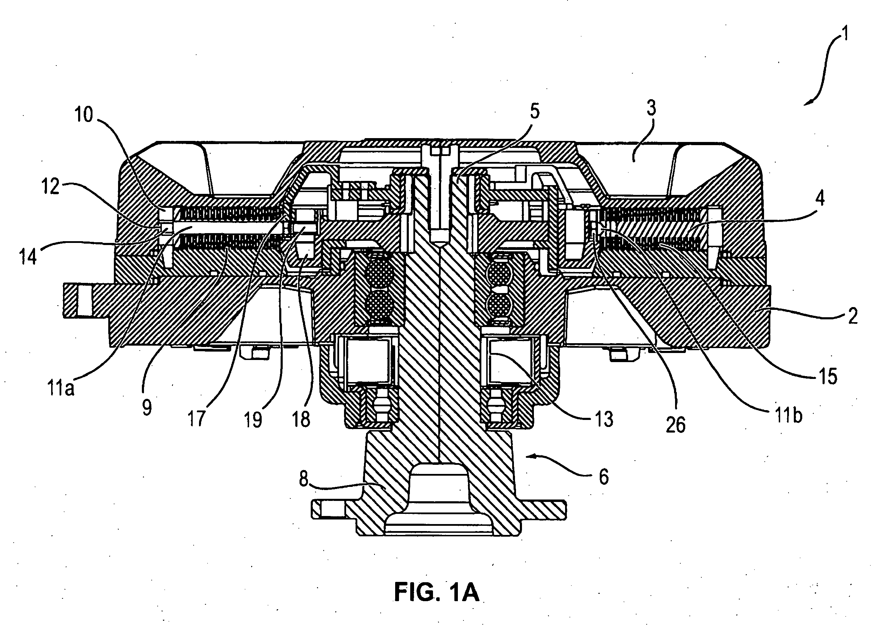

In Fig. 1A ist eine Schnittdarstellung einer erfindungsgemäßen Flüssigkeitsreibungskupplung 1 dargestellt, die ein Gehäuse aufweist, das üblicherweise aus einem Gehäusekörper 2 und einem Deckel 3 aufgebaut ist.

Im Gehäuse 2, 3 ist eine Kupplungsscheibe 4 angeordnet, die gegenüber dem Gehäuse 2, 3 drehbar ist. Die gegenüber dem Gehäuse 2, 3 drehbare Kupplungsscheibe 4 ist hierbei drehfest an einem Ende 5 einer zentral innerhalb des Gehäuses 2, 3 gelagerten Welle 6 angeordnet. Am Gehäuse 2, 3 ist ein schematisch leicht vereinfacht dargestelltes antreibbares Wirkorgan 7 fixiert, das beispielsweise als Lüfterrad ausgebildet sein kann.

Eine Arbeitskammer 9 ist zwischen dem Gehäuse 2, 3 und der Kupplungsscheibe 4 angeordnet, die, wie aus Fig. 1A ersichtlich ist, Arbeitsspalte 15 aufweist, die aufgrund einer Scherwirkung auf die der Arbeitskammer 9 zugeführten Kupplungsflüssigkeit eine Drehmomentübertragung möglich machen.

Ferner ist eine Vorratskammer 10 für die genannte Kupplungsflüssigkeit vorgesehen, wobei ein Zuführkanal 11a, 11 b von der Vorratskammer 10 zur Arbeitskammer 9 führt und damit den Vorlauf bildet.

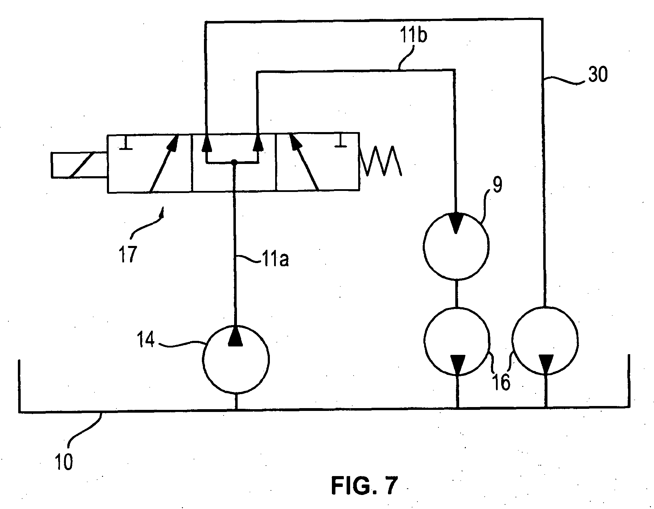

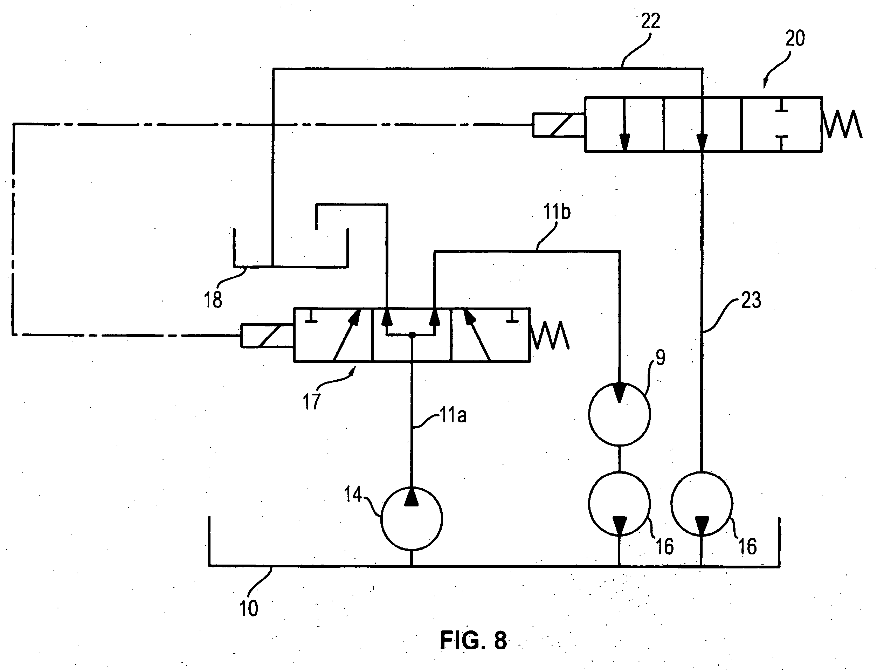

Ferner ist erfindungsgemäß ein Rückpumpsystem bzw. eine Rückförderpumpe 16 vorgesehen, die zur Rückführung von Kupplungsflüssigkeit von der Arbeitskammer 9 zur Vorratskammer 10 dient. Diese Rückförderpumpe wird entweder von der entstehenden Fliehkraft gebildet, die zum Evakuieren der Arbeitskammer 9 Fluid zur Vorratskammer 10 nach außen pumpt. Alternativ ist es möglich, ein separates Bauteil in Form einer aktiven Rückförderpumpe vorzusehen, wie sie schematisch in dem Hydraulikdiagramm der Fig. 7 und 8 angedeutet ist, die über Scherkraft wirkt.

Die Flüssigkeitsreibungskupplung 1 weist ferner ein stationäres Kupplungsteil 13 auf, das gegenüber dem Gehäuse 2, 3 drehbar ist und vorzugsweise als Magnet, insbesondere Elektromagnet ausgebildet ist.

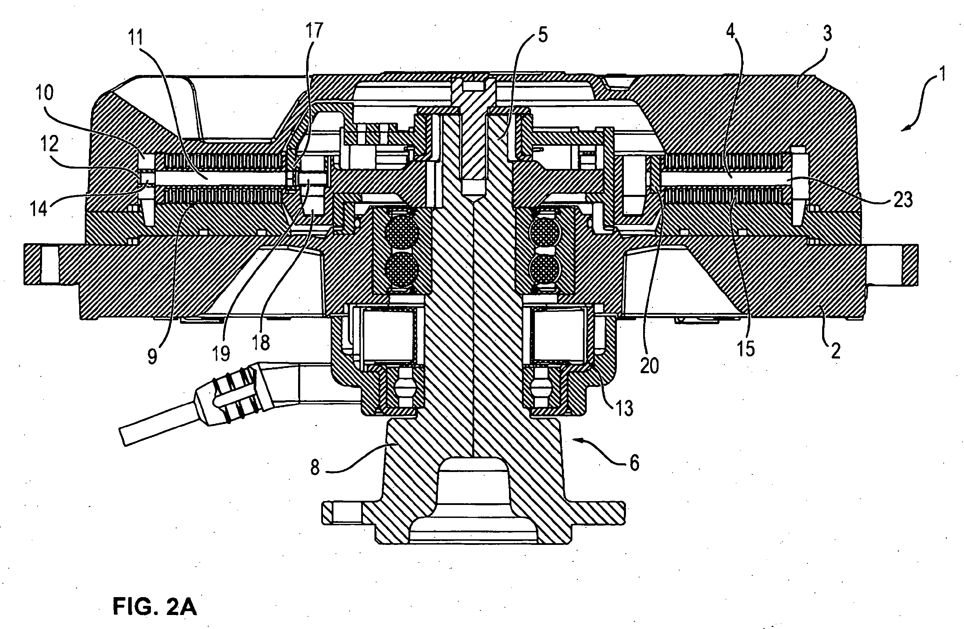

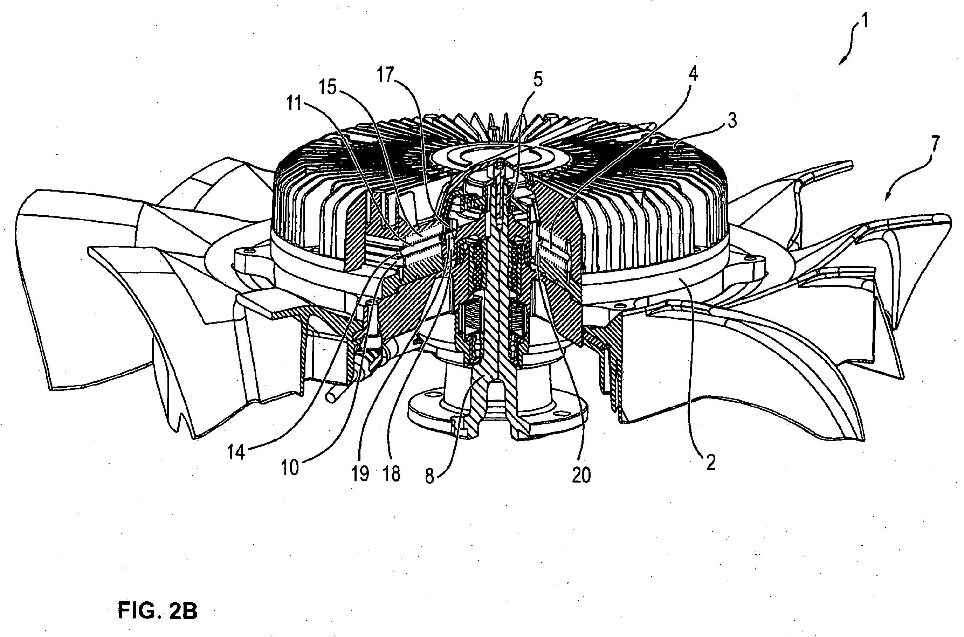

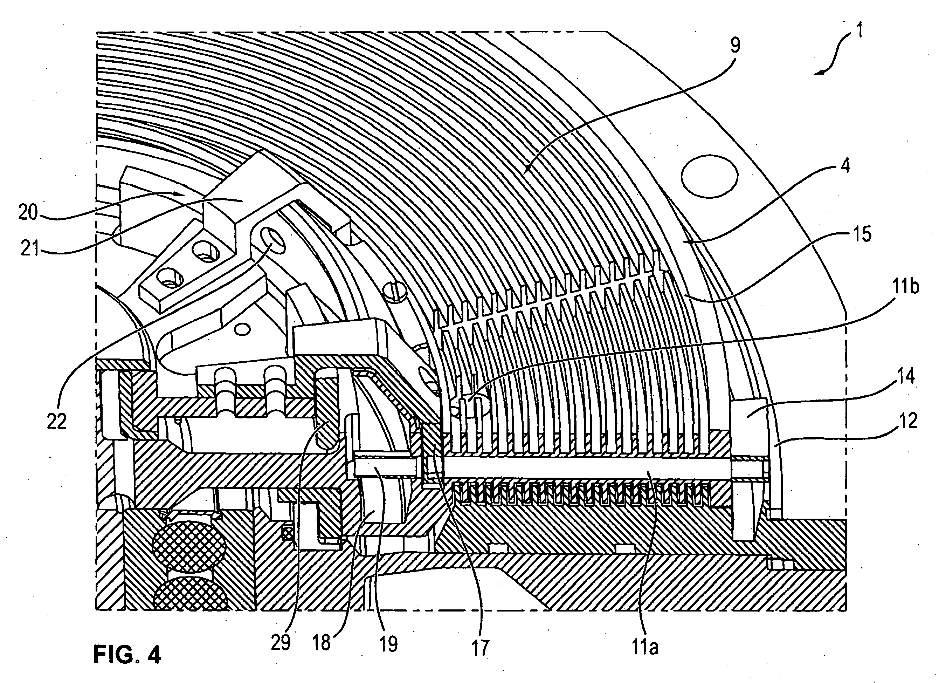

Wie sich aus der Darstellung der Fig. 1A, 1B, 2A und 2B sowie 4 ergibt, ist ferner ein innenliegendes Reservoir 18 vorgesehen, das über den Zuführkanal 11 mit der Vorratskammer 10 verbunden ist. Hierbei ist das Ventil 17 in den Zuführkanal 11 a, 11 b zwischengeschaltet und die Vorratskammer 10 ist außenliegend angeordnet, wie sich dies im Einzelnen aus den Fig. 1A bis 2B ergibt.

Ferner ist eine Rückströmsperre 19 vorgesehen, die zwischen dem Ventil 17 und dem Reservoir 18 angeordnet ist. Diese Rückströmsperre 19 kann beispielsweise ein Röhrchen sein, das über den Fluidspiegel hinaus in das Reservoir 18 hineinragt.

Wie sich ferner aus den Fig. 1A bis 2B sowie 4 und 5 ergibt, ist ein Rückleitventil 20 vorgesehen, das mit dem Ventil 17 wirkverbunden ist und einen Rücklaufkanal 23 zur Vorratskammer 10 öffnet bzw. schließt.

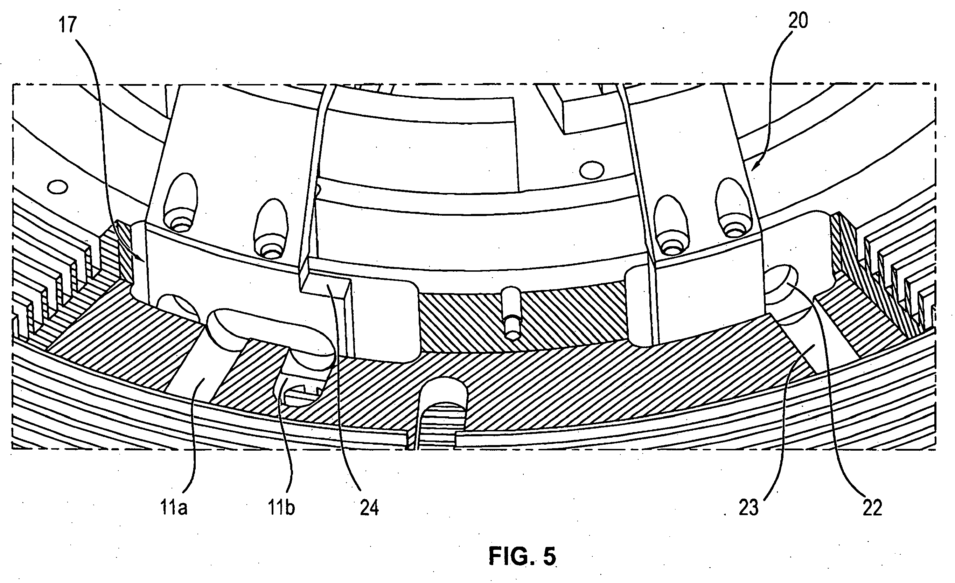

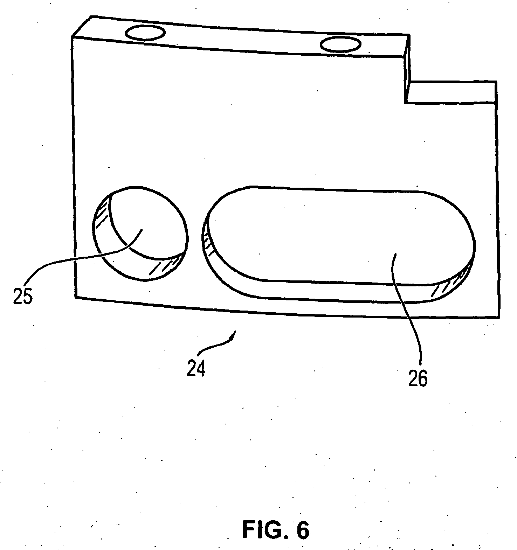

Das vorzugsweise als Mehrwegeventil ausgebildete Ventil 17 weist ein Ventilglied 24 auf, das eine Durchgangsbohrung 25 und eine Fluideinleitausnehmung 26 zum Einleiten von Fluid in die Arbeitskammer 9 aufweist, was sich vor allem aus Fig. 5 und der Detaildarstellung der Fig. 6 ergibt.

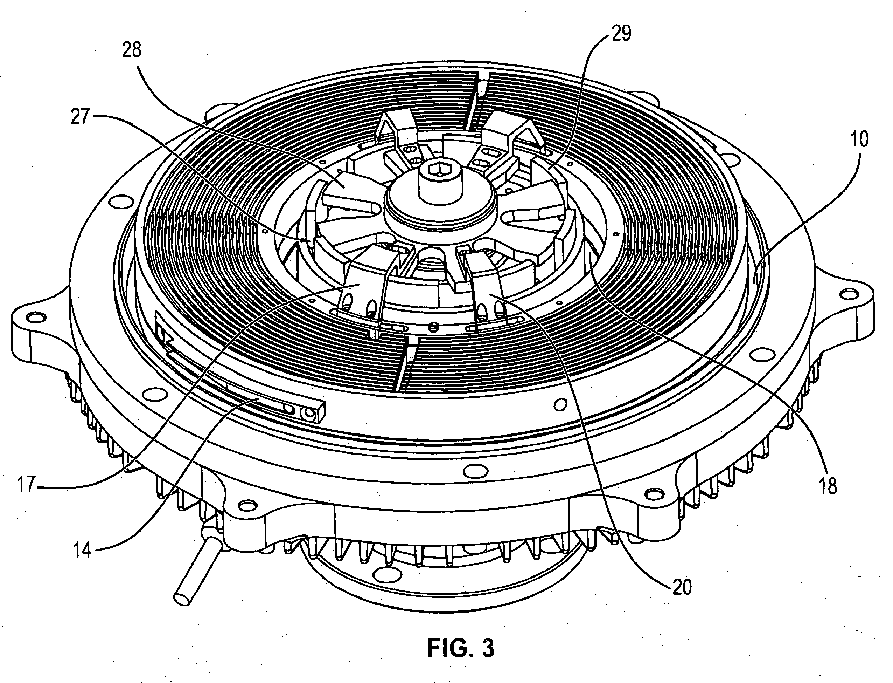

Ferner ist ein Aktuator 27 zur Betätigung des Ventils 17 und des Rückleitventils 20 vorgesehen. Vorzugsweise weist der Aktuator 27 einen relativ zur Welle 26 drehbaren Anker 28 und ein mit der Welle 6 drehbaren Fluxring 29 auf, der vom stationären Kupplungsteil in Form des Magneten 13 erregbar ist (s. Fig. 3).

Der Aktuator 27 kann auch durch einen Bimetallstreifen (nicht dargestellt) anstelle des Ankers und des Magneten bewegt werden.

Bei einer besonders bevorzugten Ausführungsform ist die Vorratskammer 10 auf der Sekundärseite der Flüssigkeitsreibungskupplung 1 und die innenliegende Kammer 18 auf der Primärseite der Flüssigkeitsreibungskupplung 1 vorgesehen.

Schließlich weist gemäß Fig. 7 bei einer alternativen Ausführungsform die Flüssigkeitsreibungskupplung 1 eine Rücklaufbohrung 30 zur Druckentlastung auf, die den Zuführkanal bzw. Zuführkanalabschnitt 11a über eine weitere (nicht dargestellte) Fluideinleitungsöffnung des Ventils 17 mit der Vorratskammer 10 verbindet. Bei dieser Ausführungsform ist kein inneres Volumen vorgesehen, so dass das Öl nicht über das innenliegende Reservoir zurückgefördert wird. Diese Ausführungsform der erfindungsgemäßen Flüssigkeitsreibungskupplung 1 kann bei kleineren Kupplungsbauformen, die kein inneres Volumen benötigen, verwendet werden, da bei diesen die Schleppmomente gering sind.

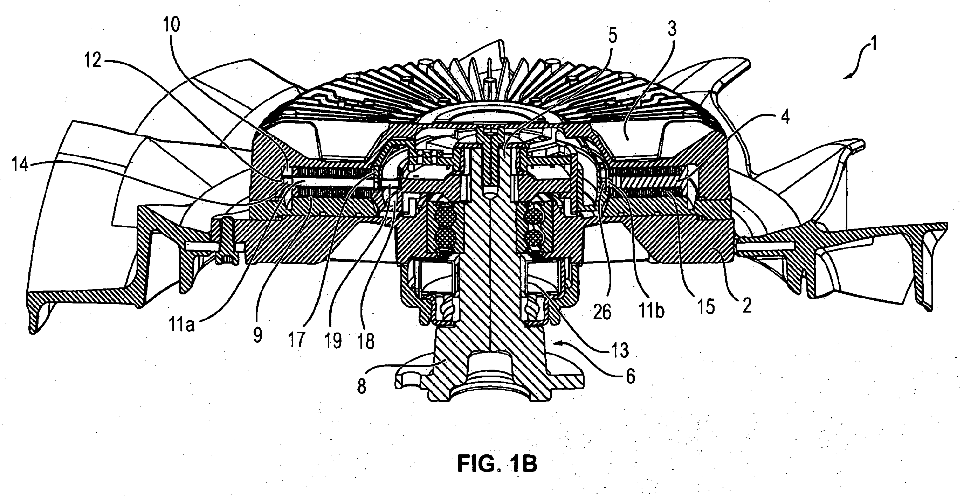

Neben der vorstehenden schriftlichen Offenbarung der Erfindung wird hiermit zur Ergänzung der Erfindungsoffenbarung explizit auf die zeichnerische Darstellung der Erfindung in den Fig. 1 bis 4 verwiesen.

### Bezugszeichenliste

- 1: Flüssigkeitsreibungskupplung
- 2, 3: Gehäuse (2: Gehäusekörper, 3: Deckel)
- 4: Kupplungsscheibe
- 5: Ende der Welle 6
- 6: Welle
- 7: Wirkorgan (z.B. Pumpenrad, Lüfterrad usw.)
- 8: zweites Ende der Welle 6
- 9: Arbeitskammer
- 10: Vorratskammer
- 11a, 11b: Zuführkanal
- 12: Scherspalt
- 13: stationäres Kupplungsteile (Magnet)
- 14: Vorlaufpumpenelement
- 15: Arbeitsspalte
- 16: Rückförderpumpe
- 17: Ventil
- 18: innenliegendes Reservoir
- 19: Rückströmsperre
- 20: Rückleitventil
- 21: Ventilarm
- 22: Verbindungsbohrung
- 23: Rücklaufkanal
- 24: Ventilglied
- 25: Durchgangsbohrung
- 26: Fluideinleitausnehmung
- 27: Aktuator
- 28: Anker
- 29: Fluxring
- 30: Rücklaufbohrung

## Patentansprüche

1. Flüssigkeitsreibungskupplung (1)
- mit einem Gehäuse (2, 3), an dem ein Wirkorgan (7) angeordnet ist
- mit einer Kupplungsscheibe (4),
• die gegenüber dem Gehäuse (2, 3) drehbar ist, und
• die an einem Ende (5) einer zentral innerhalb des Gehäuses (2, 3) gelagerten Welle (6) angeordnet ist,
- mit einer Arbeitskammer (9) zwischen dem Gehäuse (2, 3) und der Kupplungsscheibe (4);
- mit einer Vorratskammer (10) für Kupplungsflüssigkeit; und
- mit einem Zuführkanal (11a, 11 b), der von der Vorratskammer (10) zur Arbeitskammer (9) führt, und in dem ein Ventil (17) angeordnet ist, **gekennzeichnet**
- **durch** ein gegenüber dem Gehäuse (2, 3) drehbares Vorlaufpumpenelement (14),
• das drehfest auf der Welle (6) angeordnet ist, und
• das mit dem Gehäuse (2, 3) einen Scherspalt (12) definiert; und
- wobei die Vorratskammer (10) außen liegend angeordnet ist.

2. Flüssigkeitsreibungskupplung nach Anspruch 1, **dadurch gekennzeichnet, dass** ein stationäres Kupplungsteil (13) vorgesehen ist, gegenüber dem das Gehäuse (3) drehbar ist.

3. Flüssigkeitsreibungskupplung nach Anspruch 1 oder 2; **gekennzeichnet durch** ein innenliegendes Reservoir (18), das über den Zuführkanal (11a, 11b) unter Zwischenschaltung des Ventils (17) mit der Vorratskammer (10) verbunden ist.

4. Flüssigkeitsreibungskupplung nach Anspruch 3, **gekennzeichnet durch** eine Rückströmsperre (19), die zwischen dem Ventil (17) und dem Reservoir (18) angeordnet ist.

5. Flüssigkeitsreibungskupplung nach einem der Ansprüche 1 bis 4, **dadurch gekennzeichnet, dass** das Ventil (17) ein Mehrwegeventil ist.

6. Flüssigkeitsreibungskupplung nach einem der Ansprüche 1 bis 5, **gekennzeichnet durch** ein Rückleitventil (20), das mit dem Ventil (17) wirkverbunden ist und einen Rücklaufkanal (23) zur Vorratskammer (10) öffnet bzw. schließt.

7. Flüssigkeitsreibungskupplung nach Anspruch 5, **dadurch gekennzeichnet, dass** das Mehrwegeventil (17) ein Ventilglied (24) aufweist, das eine Durchgangsbohrung (25) und eine Fluideinleitausnehmung (26) zum Einleiten von Fluid in die Arbeitskammer (9) aufweist.

8. Flüssigkeitsreibungskupplung nach einem der Ansprüche 1 bis 7, **gekennzeichnet durch** eine Rückförderpumpe (16) zur Rückführung von Kupplungsflüssigkeit von der Arbeitskammer (9) zur Vorratskammer (10).

9. Flüssigkeitsreibungskupplung nach einem der Ansprüche 1 bis 8, **gekennzeichnet durch** einen Aktuator (27) zur Betätigung des Ventils (17) und des Rückleitventils (20).

10. Flüssigkeitsreibungskupplung nach Anspruch 9, **dadurch gekennzeichnet, dass** der Aktuator (27) einen relativ zur Welle (6) drehbaren Anker (28) und einen mit der Welle (6) drehbaren Fluxring (29) aufweist, der vom stationären Kupplungsteil (13) erregt wird.

11. Flüssigkeitsreibungskupplung nach Anspruch 9, **dadurch gekennzeichnet, dass** der Aktuator (27) mittels einer Bimetallstreifenanordnung bewegbar ist.

12. Flüssigkeitsreibungskupplung nach einem der Ansprüche 1 bis 11, **dadurch gekennzeichnet, dass** die Vorratskammer (10) vorzugsweise auf der Sekundärseite angeordnet ist.

13. Flüssigkeitsreibungskupplung nach einem der Ansprüche 1 bis 12, **dadurch gekennzeichnet, dass** das innenliegende Reservoir (18) auf der Primärseite angeordnet ist.

14. Flüssigkeitsreibungskupplung nach Anspruch 1, **gekennzeichnet durch** eine Rücklaufbohrung (30) zur Druckentlastung, die einen Zuführkanalabschnitt (11a) des Zuführkanals (11a, 11b) über eine weitere Fluideinleitungsöffnung des Ventils (17) mit der Vorratskammer (10) verbindet.

## Claims

1. A fluid friction clutch (1)
- having a housing (2, 3) on which an operative element (7) is arranged
- having a clutch disk (4),
• which is rotatable relative to the housing (2, 3), and
• which is arranged at one end (5) of a shaft (6) centrally supported inside the housing (2, 3),
- having a working chamber (9) between the housing (2, 3) and the clutch disk (4);
- having a storage chamber (10) for clutch fluid; and
- having a feed duct (11a, 11b), which leads from the storage chamber (10) to the working chamber (9) and in which a valve (17) is arranged, **characterized**
- **by** a supply pump element (14) which is rotatable relative to the housing (2, 3) and
• which is arranged, rotationally fixed, on the shaft (6), and
• which defines a shear gap (12) with the housing (2, 3); and
- wherein the storage chamber (10) is arranged externally.

2. Fluid friction clutch according to Claim 1, **characterized in that** a stationary clutch part (13) is provided, relative to which the housing (3) is rotatable.

3. Fluid friction clutch according to Claim 1 or 2, **characterized by** an internal reservoir (18), which is connected to the storage chamber (10) by way of the feed duct (11a, 11b) with insertion of the valve (17).

4. Fluid friction clutch according to Claim 3, **characterized by** a return flow barrier (19), which is arranged between the valve (17) and the reservoir (18).

5. Fluid friction clutch according to one of Claims 1 to 4, **characterized in that** the valve (17) is a multiway valve.

6. Fluid friction clutch according to one of Claims 1 to 5, **characterized by** a return valve (20), which is operatively connected to the valve (17) and which opens and closes a return duct (23) to the storage chamber (10).

7. Fluid friction clutch according to Claim 5, **characterized in that** the multiway valve (17) comprises a valve element (24), which has a passage (25) and a fluid inlet recess (26) for introducing fluid into the working chamber (9).

8. Fluid friction clutch according to one of Claims 1 to 7, **characterized by** a return pump (16) for returning clutch fluid from the working chamber (9) to the storage chamber (10).

9. Fluid friction clutch according to one of Claims 1 to 8, **characterized by** an actuator (27) for actuating the valve (17) and the return valve (20).

10. Fluid friction clutch according to Claim 9, **characterized in that** the actuator (27) comprises an armature (28), rotatable relative to the shaft (6), and a flux ring (29), which is rotatable with the shaft (6) and which is excited by the stationary clutch part (13).

11. Fluid friction clutch according to Claim 9, **characterized in that** the actuator (27) can be moved by means of a bimetal strip arrangement.

12. Fluid friction clutch according to one of Claims 1 to 11, **characterized in that** the storage chamber (10) is preferably arranged on the secondary side.

13. Fluid friction clutch according to one of Claims 1 to 12, **characterized in that** the internal reservoir (18) is arranged on the primary side.

14. Fluid friction clutch according to Claim 1, **characterized by** a return bore (30) for the purpose of pressure relief, which connects a feed duct portion (11a) of the feed duct (11a, 11b) to the storage chamber (10) by way of a further fluid inlet aperture of the valve (17).

## Revendications

1. Accouplement à friction de liquide (1), comprenant
- un boîtier (2, 3) sur lequel est disposé un organe fonctionnel (7),
- un disque d'accouplement (4),
- qui peut tourner par rapport au boîtier (2, 3), et
- qui est disposé à une extrémité (5) d'un arbre (6) supporté centralement à l'intérieur du boîtier (2, 3),
- une chambre de travail (9) entre le boîtier (2, 3) et le disque d'accouplement (4) ;
- une chambre de stockage (10) pour un liquide d'accouplement ; et
- un canal d'alimentation (11a, 11b), qui conduit depuis la chambre de stockage (10) à la chambre de travail (9), et dans lequel est disposée une soupape (17),
**caractérisé par**
- un élément de pompe d'alimentation (14) pouvant tourner par rapport au boîtier (2, 3),
- qui est disposé de manière solidaire en rotation sur l'arbre (6), et
- qui définit avec le boîtier (2, 3) une fente de cisaillement (12) ; et
- la chambre de stockage (10) étant disposée à l'extérieur.

2. Accouplement à friction de liquide selon la revendication 1, **caractérisé en ce qu'**une partie d'accouplement stationnaire (13) est prévue, par rapport à laquelle le boîtier (3) peut tourner.

3. Accouplement à friction de liquide selon la revendication 1 ou 2, **caractérisé par** un réservoir intérieur (18) qui est connecté par le biais du canal d'alimentation (11a, 11b) à la chambre de stockage (10) par interposition de la soupape (17).

4. Accouplement à friction de liquide selon la revendication 3, **caractérisé par** un clapet antiretour (19) qui est disposé entre la soupape (17) et le réservoir (18).

5. Accouplement à friction de liquide selon l'une quelconque des revendications 1 à 4, **caractérisé en ce que** la soupape (17) est une soupape à plusieurs voies.

6. Accouplement à friction de liquide selon l'une quelconque des revendications 1 à 5, **caractérisé par** une soupape de retour (20) qui est connectée fonctionnellement à la soupape (17) et qui ouvre ou ferme un canal de retour (23) conduisant à la chambre de stockage (10).

7. Accouplement à friction de liquide selon la revendication 5, **caractérisé en ce que** la soupape à plusieurs voies (17) présente un organe de soupape (24) qui présente un alésage traversant (25) et un évidement d'introduction de fluide (26) pour introduire du fluide dans la chambre de travail (9).

8. Accouplement à friction de liquide selon l'une quelconque des revendications 1 à 7, **caractérisé par** une pompe de refoulement (16) pour refouler du liquide d'accouplement de la chambre de travail (9) à la chambre de stockage (10).

9. Accouplement à friction de liquide selon l'une quelconque des revendications 1 à 8, **caractérisé par** un actionneur (27) pour l'actionnement de la soupape (17) et de la soupape de retour (20).

10. Accouplement à friction de liquide selon la revendication 9, **caractérisé en ce que** l'actionneur (27) présente un induit (28) pouvant tourner par rapport à l'arbre (6) et une bague de flux (29) pouvant tourner avec l'arbre (6), laquelle est excitée par la partie d'accouplement stationnaire (13).

11. Accouplement à friction de liquide selon la revendication 9, **caractérisé en ce que** l'actionneur (27) peut être déplacé au moyen d'un système de bilame.

12. Accouplement à friction de liquide selon l'une quelconque des revendications 1 à 11, **caractérisé en ce que** la chambre de stockage (10) est disposée de préférence sur le côté secondaire.

13. Accouplement à friction de liquide selon l'une quelconque des revendications 1 à 12, **caractérisé en ce que** le réservoir situé à l'intérieur (18) est disposé sur le côté primaire.

14. Accouplement à friction de liquide selon la revendication 1, **caractérisé par** un alésage de retour (30) pour la détente de pression, lequel relie une portion de canal d'alimentation (11a) du canal d'alimentation (11a, 11b) à la chambre de stockage (10) par le biais d'une ouverture d'introduction de fluide supplémentaire de la soupape (17).
